(19) **Europäisches Patentamt**
**European Patent Office**
**Office européen des brevets**

(11) **EP 4 502 027 A1**

(12) **EUROPEAN PATENT APPLICATION**
published in accordance with Art. 153(4) EPC

(43) Date of publication:
**05.02.2025 Bulletin 2025/06**

(21) Application number: **23779132.2**

(22) Date of filing: **28.02.2023**

(51) International Patent Classification (IPC):
**C08J 9/18** (2006.01)

(52) Cooperative Patent Classification (CPC):
**C08J 9/18**

(86) International application number:
**PCT/JP2023/007215**

(87) International publication number:
**WO 2023/189102 (05.10.2023 Gazette 2023/40)**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**KH MA MD TN**

(30) Priority: **30.03.2022 JP 2022055937**

(71) Applicant: **Kaneka Corporation
Osaka-shi, Osaka 530-8288 (JP)**

(72) Inventors:
• **MINAMI, Tetsuya**
  **Settsu-shi, Osaka 566-0072 (JP)**
• **MINAMIDA, Yoshiaki**
  **Settsu-shi, Osaka 566-0072 (JP)**

(74) Representative: **Vossius & Partner
Patentanwälte Rechtsanwälte mbB
Siebertstrasse 3
81675 München (DE)**

(54) **METHOD FOR PRODUCING ALIPHATIC POLYESTER-BASED FOAM PARTICLES**

(57)    In order to provide a novel P3HA expanded particles that have a high closed cell ratio of expanded particles and that lead to excellent compressive strength of a resulting foamed molded product, a method for producing aliphatic polyester-based expanded particles that are obtained by expanding poly(3-hydroxyalkanoate)-based resin particles which have been cross-linked by peroxyketal is provided.

EP 4 502 027 A1

## Description

Technical Field

The present invention relates to a method for producing aliphatic polyester-based expanded particles.

Background Art

Petroleum-derived plastics are disposed of in large quantities every year, and a shortage of landfill sites and environmental pollution due to these large quantities of waste are taken up as serious problems. In recent years, microplastics have been a major problem in a marine environment. Thus, biodegradable plastics degraded by the action of microorganisms (a) in the environment such as the sea and soil and (b) in landfill sites and compost have attracted attention.

Biodegradable plastics have been developed for a wide range of applications, including (a) agricultural, forestry, and fishery materials used in the environment and (b) food containers, packaging materials, sanitary materials, and garbage bags that are difficult to recycle and reuse after use. In addition, foamed products made from biodegradable plastic are expected to be used for, for example, cushioning materials for packaging, produce boxes, fish boxes, automotive components, building materials, and civil engineering materials.

Among the above-described biodegradable plastics, poly(3-hydroxyalkanoate) (hereinafter may be referred to as "P3HA") has attracted attention as a plastic derived from a plant material from the viewpoint of excellent biodegradability and carbon neutrality.

The development of techniques relating to biodegradable plastics has conventionally been pursued vigorously. For example, Patent Literature 1 discloses poly(3-hydroxyalkanoate)-based expanded particles, in which a gel fraction of a whole expanded particle is 30% by weight to 80% by weight, and a difference between a gel fraction inside of the expanded particle and a gel fraction outside of the expanded particle is not more than 25% by weight.

Patent Literature 2 discloses poly(3-hydroxyalkanoate)-based expanded particles, which have at least two melting peaks in a DSC curve obtained by differential scanning calorimetry and in which high temperature-side melting heat quantity (X) is 0.1 J/g to 20 J/g, gel fraction (Y) is 20% by weight to 75% by weight, and the melting heat quantity (X) and the gel fraction (Y) satisfy the following formula: $X + Y \geq 30$.

Citation List

[Patent Literature]

> [Patent Literature 1]
> International Publication No. WO 2021-002092
> [Patent Literature 2]
> International Publication No. WO 2019-146555

Summary of Invention

Technical Problem

However, conventional techniques as described above may result in a low closed cell ratio of expanded particles, and thus there has been room for improvement from the viewpoint of compressive strength of a resultant foamed molded product.

In view of the above, an object of an embodiment of the present invention is to provide a novel method for producing aliphatic polyester-based expanded particles that have a high closed cell ratio of expanded particles and that lead to excellent compressive strength of a resulting foamed molded product.

Solution to Problem

In other words, an embodiment of the present invention includes the following feature.

A method for producing aliphatic polyester-based expanded particles, the method including the steps of: dispersing, in a vessel, aliphatic polyester-based resin particles and a blowing agent into an aqueous dispersion medium, the aliphatic polyester-based resin particles including an aliphatic polyester-based resin and having been cross-linked by peroxyketal; and releasing, by opening one end of the vessel, a dispersion slurry in the vessel into an area having a pressure lower than a pressure inside the vessel.

Advantageous Effects of Invention

An aspect of the present invention makes it possible to provide novel aliphatic polyester-based expanded particles that have a high closed cell ratio of expanded particles and that lead to excellent compressive strength of a resulting foamed molded product.

Description of Embodiments

The following description will discuss embodiments of the present invention. The present invention is not, however, limited to these embodiments. The present invention is not limited to the configurations described below, but may be altered in various ways within the scope of the claims. The present invention also encompasses, in its technical scope, any embodiment or example derived by combining technical means disclosed in differing embodiments and Examples. Further, it is possible to form a new technical feature by combining the technical means disclosed in the respective embodiments. All academic and patent documents cited in the present specification are incorporated herein by reference. Any numerical range expressed as "A to B" in the present specification means "not less than A and not more than B (i.e., a range from A to B which includes both A and B)" unless otherwise stated.

[1. Technical idea of embodiment of present invention]

Patent Literature 1 discloses that preferably, poly(3-hydroxyalkanoate)-based expanded particles are cross-linked by an organic peroxide and that preferably, the organic peroxide has a 1-hour half-life temperature of 114°C to 124°C, has a carbonate group, and is liquid at normal temperature. Patent Literature 1 discloses that a percarbonate having a carbonate group is used as the organic peroxide, but does not disclose use of peroxyketal.

Patent Literature 2 discloses, for the poly(3-hydroxyalkanoate)-based expanded particles, using, as a crosslinking agent, a benzoyl peroxide which is a diacyl peroxide, but does not disclose using peroxyketal.

The inventors of the present invention have uniquely obtained the following finding: in a case where only a percarbonate having a carbonate group is used as a crosslinking agent or only a benzoyl peroxide is used as a crosslinking agent, resultant expanded particles may have a low closed cell ratio. In a case where expanded particles having a low closed cell ratio are to be molded, a foamed molded product having a low compressive strength is obtained. In light of the above, the present inventors made diligent studies, in order to provide aliphatic polyester-based expanded particles that have a high closed cell ratio of expanded particles and that lead to excellent compressive strength of a resulting foamed molded product.

As a result of the diligent studies, the present inventors have uniquely found that surprisingly, use of peroxyketal as a crosslinking agent in producing aliphatic polyester-based expanded particles (P3HA expanded particles) makes it possible to improve the closed cell ratio of the aliphatic polyester-based expanded particles and also to increase the compressive strength of a resultant foamed molded product. Consequently, the inventors have achieved an embodiment of the present invention.

[2. Aliphatic polyester-based expanded particles]

In the present specification, "aliphatic polyester-based expanded particles" may be referred to as "expanded particles", "aliphatic polyester-based expanded particles in accordance with an embodiment of the present invention" may be referred to as "the present expanded particles", an "aliphatic polyester-based foamed molded product" may be referred to as a "foamed molded product", and an "aliphatic polyester-based foamed molded product in accordance with an embodiment of the present invention" may be referred to as "the present foamed molded product".

The present expanded particles are expanded particles obtained by expanding the aliphatic polyester-based resin particles that include an aliphatic polyester-based resin. In the present specification, the "aliphatic polyester-based resin particles" may be referred to as "resin particles".

In the present specification, a repeating unit derived from an X monomer may be referred to as an "X unit". A repeating unit can also be described as a structural unit.

The aliphatic polyester-based expanded particles in accordance with an embodiment of the present invention may include an aliphatic polyester-based resin, and a degradation product derived from peroxyketal, a diluent, and/or the like.

Since the aliphatic polyester-based expanded particles in accordance with an embodiment of the present invention have the above-described configuration, the aliphatic polyester-based expanded particles advantageously have a high closed cell ratio and also advantageously make it possible to provide a foamed molded product having high compressive strength.

Further, the aliphatic polyester-based expanded particles in accordance with an embodiment of the present invention, which include a P3HA-based resin that is a biodegradable resin, and the aliphatic polyester-based foamed molded product obtained by molding the aliphatic polyester-based expanded particles can reduce marine pollution and soil pollution which are caused by disposal. This allows the aliphatic polyester-based expanded particles and the aliphatic polyester-based foamed molded product to contribute to achieving, for example, Sustainable Development Goals (SDGs) such as Goal 12 "Ensure sustainable consumption and production patterns" and Goal 14 "Conserve and sustainably use the oceans, seas and marine resources for sustainable development".

(2-1. Aliphatic polyester-based resin)

The aliphatic polyester-based expanded particles in accordance with an embodiment of the present invention include an aliphatic polyester-based resin as a component. Specific examples of the aliphatic polyester-based resin include poly(3-hydroxyalkanoate)-based resin, polylactic acid, polybutylene succinate, polybutylene succinate adipate, polybutylene adipate terephthalate, polybutylene succinate terephthalate, and polycaprolactone. The aliphatic polyester-based resin is preferably a poly(3-hydroxyalkanoate)-based resin that is a biodegradable resin.

The aliphatic polyester-based resin contains the poly(3-hydroxyalkanoate)-based resin in an amount of preferably not less than 50% by weight, more preferably not less than 60% by weight, more preferably not less than 70% by weight, more preferably not less than 80% by weight, even more preferably not less than 90% by weight, and still even more preferably not less than 95% by weight in 100% by weight of the aliphatic polyester-based resin. Particularly preferably, the aliphatic polyester-based resin contains, in 100% by weight of the aliphatic polyester-based resin, 100% by weight of the poly(3-hydroxyalkanoate) resin. In other words, particularly preferably, the aliphatic polyester-based resin consists only of the poly(3-hydroxyalkanoate)-based resin.

(Poly(3-hydroxyalkanoate)- based resin)

The aliphatic polyester-based expanded particles in accordance with an embodiment of the present invention preferably include a poly(3-hydroxyalkanoate)-based resin as a component. In the present specification, the "poly(3-hydroxyalkanoate)-based resin" may be referred to as "poly(3-hydroxyalkanoate)" or "P3HA". This component will be described below.

The P3HA is a polymer having a 3-hydroxyalkanoate unit as an essential structural unit (monomer unit). In the present specification, "3-hydroxyalkanoate" may be referred to as "3HA". Specifically, the P3HA is preferably a polymer including a repeating unit represented by the following general formula (1):

$$[-CHR-CH_2-CO-O-] \, ... \qquad (1)$$

In general Formula (1), R represents an alkyl group expressed by $C_nH_{2n+1}$, and n represents an integer of 1 to 15. Examples of R include linear or branched alkyl groups such as a methyl group, an ethyl group, a propyl group, an isopropyl group, a butyl group, an isobutyl group, a t-butyl group, a pentyl group, and a hexyl group, n is preferably 1 to 10, and more preferably 1 to 8.

As the P3HA, P3HA produced from a microorganism, in particular, is preferable. The P3HA produced from a microorganism is poly[(R)-3HA] in which 3HA units are all (R)-3HA.

The P3HA includes preferably not less than 50 mol% of 3HA units (in particular, the repeating unit of general formula (1)), more preferably not less than 70 mol% of 3HA units, and even more preferably not less than 80 mol% of 3HA units in 100 mol% of all repeating units of the P3HA. The repeating units (monomer units) may be 3HA units only or may include, in addition to the 3HA unit, a repeating unit derived from a monomer other than 3HA (e.g., a 4-hydroxyalkanoate unit and the like).

Specific examples of the 3HA units include a 3-hydroxybutyrate unit, a 3-hydroxyvalerate unit, and a 3-hydroxyhexanoate unit. 3-hydroxybutyrate is close to propylene in terms of a melting point and tensile strength. Therefore, the P3HA in accordance with an embodiment of the present invention preferably includes a 3-hydroxybutyrate unit. In the present specification, "3-hydroxybutyrate" may be referred to as "3HB".

In a case where the P3HA contains two or more types of repeating units, a monomer that is derived from a repeating unit other than a repeating unit contained in the highest amount in P3HA is referred to as a comonomer. In the present specification, a "repeating unit derived from a comonomer" may be referred to as a "comonomer unit".

The comonomer is not particularly limited, and is preferably 3-hydroxyhexanoate (hereinafter may be referred to as 3HH), 4-hydroxybutyrate (hereinafter may be referred to as 4HB), or the like.

The P3HA is preferably one or more substances selected from the group consisting of poly(3-hydroxybutyrate), poly(3-hydroxybutyrate-co-3-hydroxyvalerate), poly(3-hydroxybutyrate-co-3-hydroxyvalerate-co-3-hydroxyhexanoate), po!y(3-hydroxybutyrate-co-3-hydroxyhexanoate), and poly(3-hydroxybutyrate-co-4-hydroxybutyrate). The above configuration makes it possible to more easily provide aliphatic polyester-based expanded particles that have a high closed cell ratio of expanded particles and that lead to excellent compressive strength of a resulting foamed molded product. Among these, poly(3-hydroxybutyrate-co-3-hydroxyhexanoate) (P3HB3HH) and poly(3-hydroxybutyrate-co-4-hydroxybutyrate) (P3HB4HB) are more preferable from the viewpoint of, for example, processability and physical properties of a foamed molded product.

The P3HA preferably has a 3HB unit as an essential repeating unit (structural unit) and has a comonomer unit. That is, the P3HA is preferably a copolymer having a 3HB unit and a comonomer unit.

More specifically, the P3HA is a copolymer having a 3-hydroxybutyrate unit and a comonomer unit, and the ratio of the 3HB unit to the comonomer unit (the 3HB unit/the comonomer unit) in 100 mol% of all repeating units in the copolymer is preferably 99/1 (mol%/mol%) to 85/15 (mol%/mol%). The ratio of the 3HB unit to the comonomer unit (the 3HB unit/the comonomer unit) in 100 mol% of all repeating units in the copolymer is more preferably 97/3 (mol%/mol%) to 87/13 (mol%/mol%) and even more preferably 95/5 (mol%/mol%) to 89/11 (mol%/mol%) from the viewpoint of achieving a higher expansion ratio.

The P3HA having the monomeric units in such a ratio can be prepared in accordance with a method known to a person skilled in the art, which is, for example, the method described in International Publication No. WO 2009/145164. The ratio of the monomeric units in the P3HA can be determined by a method known to a person skilled in the art, which is, for example, the method described in International Publication No. WO 2013/147139.

In an embodiment of the present invention, a method for producing P3HA is not particularly limited, and may be a production method using chemical synthesis or may be a production method using a microorganism. Among these methods, a production method using a microorganism is preferable. For a P3HA production method using a microorganism, a known method can be employed, and preferably includes a culture process, a purification process, and a drying process.

A method for culturing a microorganism that produces P3HA in the culture process is not particularly limited, and, for example, the method described in International Publication No. WO 2019/142717 can be used.

Specific examples of a bacterium that produces a copolymer of 3HB and another hydroxyalkanoate include *Aeromonas caviae*, which is a P3HB3HV-producing bacterium and also is a P3HB3HH-producing bacterium, and *Alcaligenes* eutrophus, which is a P3HB4HB-producing bacterium. In particular, regarding P3HB3HH, for example, an *Alcaligenes eutrophus* AC32 strain (*Alcaligenes eutrophus* AC32, FERM BP-6038) (T. Fukui, Y. Doi, J. Bateriol., 179, p. 4821-4830 (1997)) into which genes of a group of P3HA synthases have been introduced to increase productivity of P3HB3HH is more preferable. In a method for producing P3HA, microorganism bacterial cells obtained by culturing microorganisms, such as an *Alcaligenes eutrophus* AC32 strain, under appropriate conditions and accumulating P3HB3HH in bacterial cells of the microorganisms are suitably used. Regarding the copolymer-producing bacterium, besides the above, a genetically modified microorganism into which various P3HA synthesis-related genes have been introduced may be used in accordance with P3HA that is desired to be produced. In addition, regarding culture conditions for a microorganism (bacterium), various culture conditions including a type of substrate may be optimized in accordance with P3HA that is desired to be produced.

A method for purifying P3HA obtained by microbial culture in the purification process is not particularly limited, and a known physical treatment, and/or a known chemical treatment, and/or a known biological treatment may be employed. For example, a purification method described in International Publication No. WO 2010/067543 may be preferably employed.

A method for subjecting the P3HA obtained by microbial culture and purification to drying in the drying process is not particularly limited, and spray drying, fluidized bed drying, flash drying, rotational drying, vibrational drying, and band drying can be employed. For example, a drying method described in International Publication No. WO 2018/070492 may be preferably employed.

The drying process may include: (a) a step of preparing an aqueous suspension A containing 100 parts by weight of P3HA and 0.1 parts by weight to 5.0 parts by weight of non-ionic water-soluble polymer which will be described below; and (b) a step of spray-drying the aqueous suspension A having been prepared in the step (a).

The inclusion of the steps (a) and (b) yields P3HA containing 0.1 parts by weight to 5.0 parts by weight of a non-ionic water-soluble polymer with respect to 100 parts by weight of P3HA.

In the step (b) in the method for producing P3HA in accordance with an embodiment of the present invention, the aqueous suspension A having been prepared in the step (a) is spray-dried. Examples of a spray-drying method include a method in which the aqueous suspension A in a state of fine droplets is supplied into a dryer and dried in contact with hot air in the dryer. A method (atomizer) of supplying the aqueous suspension A in a state of fine droplets into a dryer is not particularly limited, and can be a known method such as a method using a rotary disc or a method using a nozzle. A manner of contact between the droplets and the hot air in the dryer is not particularly limited. The droplets and the hot air can be brought in contact with each other, for example, in a co-current manner, a countercurrent manner, or in a manner combining a co-current manner and a countercurrent manner.

A drying temperature in spray-drying of the step (b) may be any temperature at which most of the aqueous medium can be removed from the droplets of the aqueous suspension A. The drying temperature can be set as appropriate, provided that the aqueous solution A can be dried until a desired moisture content is achieved and that a deterioration in quality (a decrease in molecular weight and a reduction in color tone) and melting are minimized. In addition, a volume of hot air in the dryer can be set as appropriate, for example, in accordance with a size of the dryer and the like.

The method for producing P3HA may include, after the step (b), a step of further drying resulting P3HA. The method for producing P3HA may include other step(s) (for example, a step of adding various additives to the aqueous suspension A, or the like).

The method for producing P3HA makes it possible to obtain P3HA in a dry state with high productivity and excellent thermal stability. In particular, the method for producing P3HA makes it possible to reduce cost (facility cost and utilities) of the drying process. Further, the method for producing P3HA makes it possible to obtain P3HA in a powder (P3HA powder) state, and thus makes it possible to highly efficiently obtain P3HA with excellent handleability.

(2-2. Additive(s))

The present expanded particles may include an aliphatic polyester-based resin and further include an additive(s) (other additive(s)). As the other additive(s), for example, nucleating agents, cell adjusting agents, lubricants, plasticizers, antistatic agents, flame retardants, electrically conductive agents, heat insulating agents, antioxidants, ultraviolet ray absorbing agents, coloring agents, inorganic fillers, organic fillers, hydrolysis inhibitors, non-ionic water-soluble polymers, crosslinking agents other than peroxyketal, and the like can be used according to the purpose. As the other additive(s), an additive(s) having biodegradability, in particular, is/are preferable.

Examples of the nucleating agents include pentaerythritol, erotic acid, aspartame, cyanuric acid, glycine, zinc phenylphosphonate, and boron nitride. One of these nucleating agents may be used alone, or two or more thereof may be used in admixture. When two or more nucleating agents are used in admixture, a mixing ratio may be adjusted as appropriate according to the purpose.

The amount of the nucleating agent(s) contained in the present expanded particles is not particularly limited. For example, the nucleating agent(s) is contained in an amount of preferably not more than 5.0 parts by weight, more preferably not more than 3.0 parts by weight, and even more preferably not more than 1.5 parts by weight, with respect to 100 parts by weight of the aliphatic polyester-based resin. The lower limit of the amount of the nucleating agent(s) contained in the aliphatic polyester-based resin is not particularly limited, and can be, for example, not less than 0.1 parts by weight, with respect to 100 parts by weight of the aliphatic polyester-based resin.

Examples of the cell adjusting agents include talc, silica, calcium silicate, calcium carbonate, aluminum oxide, titanium oxide, diatomaceous earth, clay, sodium bicarbonate, alumina, barium sulfate, aluminum oxide, and bentonite. Among these cell adjusting agents, talc is preferable in that talc is particularly excellent in dispersibility to P3HA. One of these cell adjusting agents may be used alone, or two or more thereof may be used in admixture. In a case where two or more cell adjusting agents are used in admixture, a mixing ratio may be adjusted as appropriate according to the purpose.

The amount of the cell adjusting agent(s) contained in the present expanded particles is not particularly limited, and is preferably 0.01 parts by weight to 1.00 part by weight, more preferably 0.03 parts by weight to 0.50 parts by weight, and even more preferably 0.05 parts by weight to 0.30 parts by weight, with respect to 100 parts by weight of the aliphatic polyester-based resin.

Examples of the lubricant include behenic acid amide, oleic acid amide, erucic acid amide, stearic acid amide, palmitic acid amide, N-stearylbehenic acid amide, N-stearylerucic acid amide, ethylenebisstearic acid amide, ethylenebisoleic acid amide, ethylenebiserucic acid amide, ethylenebislauryl acid amide, ethylenebiscapric acid amide, p-phenylenebisstearic acid amide, and a polycondensate of ethylenediamine, stearic acid, and sebacic acid. Among these lubricants, behenic acid amide and erucic acid amide are preferable in that the lubricant effect on the aliphatic polyester-based resin is particularly excellent.

The amount of the lubricant contained in the present expanded particles is not particularly limited, and is preferably 0.01 parts by weight to 5.00 parts by weight, more preferably 0.05 parts by weight to 3.00 parts by weight, and even more preferably 0.10 parts by weight to 1.50 parts by weight, with respect to 100 parts by weight of the aliphatic polyester-based resin. In addition, the lubricant is not limited to one of the lubricants and may be a mixture of two or more of the lubricants, and a mixing ratio can be adjusted as appropriate according to the purpose.

Examples of the antistatic agent include coconut oil fatty acid diethanolamide. The amount of the antistatic agent contained in the present expanded particles is not particularly limited.

The present expanded particles preferably further include a non-ionic water-soluble polymer(s), since including a non-ionic water-soluble polymer(s) can improve the expansion ratio and/or can increase compatibility with the aliphatic polyester-based resin. In other words, the aliphatic polyester-based resin particles, which serve as a raw material of the present expanded particles, preferably include a non-ionic water-soluble polymer. The "non-ionic water-soluble polymer" in the present specification is a polymer that does not ionize to ions when dissolved in water. In general, expanded particles obtained by expanding resin particles including a non-ionic water-soluble polymer are likely to exhibit a decrease in closed cell ratio. In contrast, in an embodiment of the present invention, regardless of whether resin particles used include or do not include a non-ionic water-soluble polymer, in both of such cases, it is possible to have a high closed cell ratio of the expanded particles and also have high compressive strength of a resulting foamed molded product. In an embodiment of the present invention, particularly, in a case where resin particles including a non-ionic water-soluble polymer is used, it is possible to reduce or prevent a decrease in closed cell ratio of the expanded particles due to the non-ionic water-soluble polymer. As a result, expanded particles having a high closed cell ratio can be obtained and further, a foamed molded product to be obtained from the expanded particles can have a high compressive strength.

The non-ionic water-soluble polymer has a hydrophilic group, and preferably further has a hydrophobic group. The hydrophilic group is not limited, and examples of the hydrophilic group can include an oxyethylene group, a hydroxy group, a carboxy group, and an ether group. Among these, an oxyethylene group and a hydroxy group are preferable from the viewpoint of easily balancing hydrophilicity and hydrophobicity. The hydrophobic group is not limited, and examples of the hydrophobic group can include a linear alkyl group, a branched alkyl group, an oxypropylene group, a fluoroalkyl group, and an alkylsiloxane group. Among these, a linear alkyl group, a branched alkyl group, and an oxypropylene group are preferable from the viewpoint of easily balancing hydrophilicity and hydrophobicity.

The non-ionic water-soluble polymer is preferably a biodegradable substance. The biodegradable non-ionic water-soluble polymer is not limited, and can be exemplified by a natural polymer, a semi-synthetic polymer, and a synthetic polymer. Specific examples of the natural polymer include starch, guar gum, and carrageenan xanthan gum. Specific examples of the semi-synthetic polymer include a cellulose derivative and a starch derivative. Examples of the synthetic polymer include polyalkylene oxide, polyvinyl alcohol, polyacrylamide, polyvinyl pyrrolidone, and poly-N-vinyl acetamide. Among these, a starch derivative, a cellulose derivative, polyvinyl alcohol, and polyalkylene oxide are preferable from the viewpoint of easily balancing hydrophilicity and hydrophobicity. Note that the "biodegradable substance" in the present specification is a substance having biodegradability according to OECD TG301.

The amount of the non-ionic water-soluble polymer contained in the present expanded particles is not particularly limited, and is 0.1 parts by weight to 5.0 parts by weight, preferably 0.1 parts by weight to 4.0 parts by weight, more preferably 0.1 parts by weight to 3.0 parts by weight, and even more preferably 0.1 parts by weight to 2.0 parts by weight, with respect to 100 parts by weight of the aliphatic polyester-based resin. In addition, one of these non-ionic water-soluble polymers may be used alone, or two or more thereof may be used in admixture.

(2-3. Physical properties of aliphatic polyester-based expanded particles)

(Apparent density)

The apparent density of the present expanded particles is not limited, and is preferably 20g/L to 400g/L, more preferably 25 g/L to 300 g/L, and even more preferably 30 g/L to 200 g/L. According to this configuration, it is possible to obtain an aliphatic polyester-based foamed molded product that balances mechanical strength and lightness.

(Expansion ratio)

The expansion ratio of the present expanded particles is not limited, and is preferably not less than 3 times, more preferably not less than 4 times, more preferably not less than 6 times, more preferably not less than 10 times, more preferably not less than 15 times, and even more preferably not less than 18 times. The upper limit of the expansion ratio of the present expanded particles is not limited, and can be, for example, 60 times, 50 times, 40 times, 30 times, or 18 times. According to this configuration, it is possible to obtain an aliphatic polyester-based foamed molded product that balances mechanical strength and lightness.

(High temperature-side heat quantity)

The high temperature-side heat quantity of the present expanded particles is not limited, and is preferably 0.1 J/g to 20.0 J/g, more preferably 0.3 J/g to 18.0 J/g, and even more preferably 0.5 J/g to 15.0 J/g. This configuration makes it possible to eliminate adhesion of the aliphatic polyester-based expanded particles obtained in the expansion process to each other and makes it possible to provide aliphatic polyester-based expanded particles having excellent in-mold foam moldability.

(Cell diameter)

The cell diameter of the present expanded particles is not limited, and is preferably 50 $\mu$m to 500 $\mu$m, more preferably 100 $\mu$m to 400 $\mu$m, and even more preferably 150 $\mu$m to 300 $\mu$m. This configuration makes it possible to provide aliphatic polyester-based expanded particles having excellent in-mold foam moldability.

(Gel fraction)

The gel fraction of the present expanded particles is not limited, and is preferably not less than 30% by weight, more preferably not less than 40% by weight, and more preferably not less than 50% by weight. The upper limit of the gel fraction of the present expanded particles is not limited, and can be, for example, 90% by weight, 80% by weight, or 75% by weight. This configuration has an advantage of, when in-mold foam molding is carried out, widening a process window that can provide a good foamed molded product.

(Closed cell ratio)

The closed cell ratio of the present expanded particles is not less than 90%, and is more preferably not less than 91%, more preferably not less than 92%, more preferably not less than 93%, more preferably not less than 94%, more preferably not less than 95%, more preferably not less than 96%, more preferably not less than 97%, and even more preferably not less than 98%. The upper limit of the closed cell ratio of the present expanded particles is not limited, and can be, for example, 100%, 99%, 98%, or 97%. This configuration makes it possible to provide aliphatic polyester-based expanded particles that lead to excellent compressive strength of a resultant foamed molded product.

[3. Method for producing aliphatic polyester-based expanded particles]

A method for producing aliphatic polyester-based expanded particles in accordance with an embodiment of the present invention may include the step of expanding aliphatic polyester-based resin particles which have been cross-linked by peroxyketal.

A method for producing aliphatic polyester-based expanded particles in accordance with an embodiment of the present invention may include: a dispersion step of dispersing, in a vessel, aliphatic polyester-based resin particles and a blowing agent into an aqueous dispersion medium, the aliphatic polyester-based resin particles including an aliphatic polyester-based resin and having been cross-linked by peroxyketal; and a release step of releasing, by opening one end of the vessel, a dispersion slurry in the vessel into an area having a pressure lower than a pressure inside the vessel.

A method for producing aliphatic polyester-based expanded particles in accordance with an embodiment of the present invention may include: a dispersion step of dispersing, in a vessel, aliphatic polyester-based resin particles, peroxyketal, and a blowing agent into an aqueous dispersion medium, the aliphatic polyester-based resin particles including an aliphatic polyester-based resin; and a release step of releasing, by opening one end of the vessel, a dispersion slurry in the vessel into an area having a pressure lower than a pressure inside the vessel.

In the present specification, the "method for producing aliphatic polyester-based expanded particles in accordance with an embodiment of the present invention" can be referred to as the "present production method".

In the present production method, the dispersion step and the release step may also be collectively referred to as "expansion process". Further, the present production method preferably includes, before the expansion process, a resin particle preparation process of preparing resin particles.

(3-1. Resin particle preparation process)

The present production method preferably includes, before the expansion process, a resin particle preparation process of preparing resin particles which include an aliphatic polyester-based resin. The resin particle preparation process can also be described as a process of molding a resin into a shape that is easy to utilize for expansion. An aspect of the resin particle preparation process is not particularly limited, provided that it is possible to obtain resin particles. Examples of an aspect of the resin particle preparation process include an aspect that includes: a melting and kneading step of melting and kneading a resin composition which includes an aliphatic polyester-based resin and another additive(s) which is/are optionally used; and a particle molding step of molding a melted and kneaded resin composition into a shape that is easy to utilize for expansion.

The resin particles may further contain a non-ionic water-soluble polymer in addition to the aliphatic polyester-based resin. For example, the resin particles may contain an aliphatic polyester-based resin (e.g., 100 parts by weight), and a non-ionic water-soluble polymer (e.g., 0.1 parts by weight to 5.0 parts by weight). Alternatively, the resin particles may be composed of only an aliphatic polyester-based resin, or of only an aliphatic polyester-based resin and a non-ionic water-soluble polymer.

In the melting and kneading step, a temperature employed when the resin composition is melted and kneaded cannot be generally defined because such a temperature depends on, for example, physical properties (melting point, weight average molecular weight, etc.) of the aliphatic polyester-based resin and the type of the additive used. With regard to the temperature employed when the resin composition is melted and kneaded, for example, a temperature of a melted and kneaded resin composition discharged from a nozzle of a die (hereinafter may be referred to as a composition temperature) is preferably 150°C to 200°C, more preferably 160°C to 195°C, and even more preferably 170°C to 190°C. In a case where the composition temperature is not lower than 150°C, it is unlikely that the resin composition is insufficiently melted and kneaded. On the other hand, in a case where the composition temperature is not higher than 200°C, pyrolysis of the aliphatic polyester-based resin is unlikely to occur.

An aspect of the particle molding step is not particularly limited, provided that it is possible to mold a melted and kneaded resin composition into a desired shape. The use of a melting and kneading device including a die and a cutting device as the above-described melting and kneading device makes it possible to easily mold the melted and kneaded resin composition into a desired shape in the particle molding step. Specifically, the molding into a desired shape is achieved by discharging the melted and kneaded resin composition from the nozzle of the die provided in the melting and kneading device and cutting the resin composition by the cutting device simultaneously with the discharge. The shape of the resulting resin particles is not particularly limited, and is preferably a cylindrical shape, an elliptical columnar shape, a spherical shape, a cubic shape, a rectangular parallelepiped shape, or the like shape because they are easily utilized for expansion.

In the particle molding step, the resin composition discharged from the nozzle of the die may be cooled. In a case where the resin composition discharged from the nozzle of the die is cooled, the resin composition may be cut by the cutting device simultaneously with cooling of the resin composition or after the resin composition has been cooled.

In the particle molding step, when the resin composition discharged from the nozzle of the die is cooled, a temperature exhibited by a cooled resin composition (hereinafter may be referred to as a cooling temperature) is not particularly limited. The cooling temperature is preferably 20°C to 80°C, more preferably 30°C to 70°C, and even more preferably 40°C to 60°C. This configuration allows the melted and kneaded resin composition to be crystallized sufficiently quickly, and thus has an advantage of achieving good productivity of the resin particles.

The melt flow rate (MFR) of the resin particles is not particularly limited, and is preferably 1 g/10 min to 20 g/min, more preferably 1 g/10 min to 17 g/min, and even more preferably 1 g/min to 15 g/min. With this configuration, it is possible to obtain aliphatic polyester-based expanded particles that have a high expansion ratio and a high closed cell ratio. Note that measurement of the melt flow rate of the resin particles is carried out in accordance with the measurement method described in the Examples which will be described later.

In the resin particle preparation process, the resin composition including peroxyketal is melted and kneaded simultaneously with the aliphatic polyester-based resin. This makes it possible to obtain aliphatic polyester-based resin particles which include an aliphatic polyester-based resin and which have been cross-linked by peroxyketal. In the resin particle preparation process, the method of preparing aliphatic polyester-based resin particles which include an aliphatic polyester-based resin and which have been cross-linked by peroxyketal is not particularly limited to the above-described method and the like. The aliphatic polyester-based resin particles can be prepared in accordance with any of methods disclosed in, for example, Japanese Patent Application Publication, Tokukai, No. 2009/061753 and Japanese Patent Application Publication, Tokukai, No. 2020/158613.

(3-2. Expansion process)

The expansion process can also be described as a process of expanding resin particles.

(Dispersion step)

The dispersion step can also be described as a step of preparing, in a vessel, a dispersion slurry in which in an aqueous dispersion medium, aliphatic polyester-based resin particles which include an aliphatic polyester-based resin and which have been cross-linked by peroxyketal, and a blowing agent, and according to need, a crosslinking agent other than peroxyketal, a dispersing agent, a crosslinking aid, a dispersing aid, and/or a plasticizer are dispersed.

In another aspect 1, in the dispersion step, for example, in a vessel, in an aqueous dispersion medium, peroxyketal and resin particles which include an aliphatic polyester-based resin are dispersed, so that aliphatic polyester-based resin particles which include the aliphatic polyester-based resin and which have been cross-linked by peroxyketal are prepared. Thereafter, (i) a blowing agent may be dispersed in the vessel or (ii) the aliphatic polyester-based resin particles cross-linked in the vessel may be taken out and in another vessel, a blowing agent and the aliphatic polyester-based resin particles which have been cross-linked may be dispersed in an aqueous dispersion medium.

In another aspect 2, in the dispersion step, in a vessel, in an aqueous dispersion medium, peroxyketal, a blowing agent, and resin particles which include an aliphatic polyester-based resin, and according to need, a crosslinking agent other than peroxyketal, a dispersing agent, a crosslinking aid, a dispersing aid, and/or a plasticizer may be dispersed. In the another aspect 2, in an aqueous dispersion medium, first, peroxyketal and resin particles which include an aliphatic polyester-based resin react with each other, so that aliphatic polyester-based resin particles which include the aliphatic polyester-based resin and which have been cross-linked by peroxyketal can be prepared. As a result, in the another aspect 2, in the dispersion step, it is possible to obtain a dispersion slurry in which aliphatic polyester-based resin particles that include an aliphatic polyester-based resin and that have been cross-linked by peroxyketal, and a blowing agent, and according to need, a crosslinking agent other than peroxyketal, a dispersing agent, a crosslinking aid, a dispersing aid, and/or a plasticizer are dispersed.

Note that in those other aspects 1 and 2, in the dispersion slurry, the peroxyketal, the crosslinking agent other than the peroxyketal, and the crosslinking aid may be consumed in a reaction with aliphatic polyester in the resin particles, and need not be present in the dispersion slurry. Further, in the other aspects 1 and 2, in the dispersion step, a mixture of peroxyketal and a crosslinking agent (e.g., percarbonate) other than peroxyketal may be used as the crosslinking agent. Furthermore, in the other aspects 1 and 2, even in a case where in the dispersion slurry, the peroxyketal and the crosslinking agent other than the peroxyketal are consumed in a reaction with aliphatic polyester in the resin particles, a degradation product derived from the peroxyketal and the crosslinking agent other than the peroxyketal may be present in the dispersion slurry.

In the dispersion step in accordance with an embodiment of the present invention, impregnation of the resin particles with the blowing agent and the plasticizer that is an optional component may occur and thus the blowing agent and the plasticizer may not be present in a dispersed state.

The vessel is not particularly limited, and is preferably a vessel that can withstand an expansion temperature and an expansion pressure which will be described later, and is preferably, for example, a pressure-resistant vessel.

The aqueous dispersion medium is not particularly limited, provided that the aqueous dispersion medium allows the resin particles, peroxyketal, the blowing agent, and the like to be uniformly dispersed therein. As the aqueous dispersion medium, for example, tap water and/or industrial water can also be used. From the point that stable production of expanded particles is possible, pure water, such as $R\Omega$ water (water purified by a reverse osmosis membrane method), distilled water, and deionized water (water purified by ion exchange resin), ultrapure water, and the like are preferably used as the aqueous dispersion medium.

The amount of the aqueous dispersion medium used is not particularly limited, and is preferably 100 parts by weight to 1000 parts by weight with respect to 100 parts by weight of the resin particles.

In the present production method, (i) aliphatic polyester-based resin particles which have been cross-linked by peroxyketal or (ii) peroxyketal that can function as a crosslinking agent is used. As a result of using peroxyketal as the crosslinking agent for the aliphatic polyester-based resin particles, the aliphatic polyester in resultant expanded particles becomes an aliphatic polyester that has a cross-linked structure. For example, in the expansion processes of the other aspects 1 and 2, in a case where a crosslinking reaction of the aliphatic polyester in the resin particles proceeds in parallel with impregnation, with the blowing agent, of the aliphatic polyester-based resin particles which include the aliphatic polyester-based resin and which have been cross-linked by peroxyketal, the expansion process can also be described as a crosslinking process.

The peroxyketal is preferably at least one selected from the group consisting of: 1,1-di(t-butylperoxy)cyclohexane (1-hour half-life temperature: 111.1°C), 2,2-di(t-butylperoxy)butane (1-hour half-life temperature: 121.7°C), n-butyl 4,4-di(t-butylperoxy)valerate (1-hour half-life temperature: 126.5°C), 2,2-di(4,4-di(t-butylperoxy)cyclohexyl)propane (1-hour half-life temperature: 114.0°C) and 1,1-di(t-hexylperoxy)cyclohexane (1-hour half-life temperature: 107.3°C). The above configuration makes it possible to more easily provide aliphatic polyester-based expanded particles that have a high closed cell ratio of expanded particles and that lead to excellent compressive strength of a resulting foamed molded product.

In the other aspects 1 and 2, the amount of peroxyketal used is not particularly limited, and is preferably 0.5 parts by weight to 5.0 parts by weight, more preferably 0.75 parts by weight to 4 parts by weight, and even more preferably 1 part by weight to 3 parts by weight, with respect to 100 parts by weight of the resin particles. The above configuration makes it possible to more easily provide aliphatic polyester-based expanded particles that have a high closed cell ratio of expanded particles and that lead to excellent compressive strength of a resulting foamed molded product.

Peroxyketal is used in the dispersion step, which is one step of the present production method, and/or in the resin particle preparation process, which is optionally included in the present production method. In a case where in the dispersion step, the resin particles and the peroxyketal are dispersed in an aqueous dispersion medium, the resin particles can be impregnated and reacted with the peroxyketal. Peroxyketal may be used in the resin particle preparation process in addition to use of peroxyketal in the dispersion step. More specifically, in order to react peroxyketal more with the aliphatic polyester-based resin, peroxyketal and the aliphatic polyester-based resin may be melted and kneaded with each other in the resin particle preparation process. Note that, in a case where peroxyketal that can function as a crosslinking agent is used, a cross-linked structure is formed between and/or in molecules of the aliphatic polyester-based resin in the resin particles, via a direct bond between molecular chains of the aliphatic polyester (direct bond that is not mediated by a structure derived from the crosslinking agent). In other words, in the present specification, the aliphatic polyester-based resin particles which have been cross-linked by peroxyketal, in the dispersion step of the present production method, are intended to refer to resin particles in which a cross-linked structure is formed between and/or in the molecules of the aliphatic polyester-based resin particles.

In the present production method, a crosslinking agent other than peroxyketal may be used. The crosslinking agent other than peroxyketal is not particularly limited, provided that the crosslinking agent can crosslink the aliphatic polyester-based resin. As the crosslinking agent other than peroxyketal, an organic peroxide is preferable. Depending on, for example, the type of the aliphatic polyester-based resin used, the organic peroxide used as the crosslinking agent other than peroxyketal is preferably an organic peroxide having a 1-hour half-life temperature of 90°C to 160°C and is more preferably an organic peroxide having a 1-hour half-life temperature of 115°C to 125°C. Specific examples of such an organic peroxide includes benzoyl peroxide (1-hour half-life temperature: 92°C), t-butylperoxy-2-ethylhexyl carbonate (1-hour half-life temperature: 121°C), t-butylperoxyisopropyl carbonate (1-hour half-life temperature: 118°C), t-amylperoxy-2-ethylhexyl carbonate (1-hour half-life temperature: 117°C), t-amylperoxyisopropyl carbonate (1-hour half-life temperature: 115°C), t-butylperoxyisobutyrate (1-hour half-life temperature: 93°C), t-butylperoxy-2-ethylhexanoate (1-hour half-life temperature: 95°C), t-butylperoxyisononanoate (1-hour half-life temperature: 123°C), t-butylperoxyacetate (1-hour half-life temperature: 123°C), t-butylperoxydibenzoate (1-hour half-life temperature: 125°C), t-amylperoxyisobutyrate (1-hour half-life temperature: 93°C), t-amylperoxy-2-ethylhexanoate (1-hour half-life temperature: 92°C), t-amylperoxyisonanoate (1-hour half-life temperature: 114°C), t-amylperoxyacetate (1-hour half-life temperature: 120°C), t-amylperoxybenzoate (1-hour half-life temperature: 122°C), dicumyl peroxide (1-hour half-life temperature: 137°C), 2,5-dimethyl-2,5-di(t-butylperoxy)hexane (1-hour half-life temperature: 140°C), and di-t-butyl peroxide (1-hour half-life temperature: 149°C). In a case where the organic peroxide used as the crosslinking agent other than peroxyketal has a 1-hour half-life temperature of not lower than 90°C, there is an advantage in that expanded particles having a desired gel fraction is likely to be obtained. On the other hand, the use of an organic peroxide having a 1-hour half-life temperature of not higher than 160°C has an advantage in that an unreacted crosslinking agent is unlikely to remain in a final product.

Examples of the blowing agent include: inorganic gases such as nitrogen, carbon dioxide, and air; saturated hydrocarbons each having 3 to 5 carbon atoms such as propane, normal butane, isobutane, normal pentane, isopentane, and neopentane; ethers such as dimethyl ether, diethyl ether, and methyl ethyl ether; halogenated hydrocarbons such as monochlormethane, dichloromethane, and dichlorodifluoroethane; and water. As the blowing agent, at least one selected from the group consisting of the above-described inorganic gases, saturated hydrocarbons each having 3 to 5 carbon atoms, ethers, halogenated hydrocarbons, and water can be used. Among these blowing agents, nitrogen or carbon dioxide is preferably used as the blowing agent from the viewpoint of environmental load and expansion power. One of these blowing agents may be used alone, or two or more thereof may be used in admixture. When two or more blowing agents are used in admixture, a mixing ratio may be adjusted as appropriate according to the purpose.

The amount of the blowing agent(s) used is not particularly limited, and is preferably 2 parts by weight to 10000 parts by weight, more preferably 5 parts by weight to 5000 parts by weight, and even more preferably 10 parts by weight to 1000 parts by weight, with respect to 100 parts by weight of the resin particles. In a case where the amount of the blowing agent(s) used is not less than 2 parts by weight with respect to 100 parts by weight of the resin particles, it is possible to obtain expanded particles having a high expansion ratio. On the other hand, in a case where the amount of the blowing agent(s) used is not more than 10000 parts by weight with respect to 100 parts by weight of the resin particles, an effect corresponding to the amount of the blowing agent(s) used is obtained, and thus no economical waste occurs.

In the present production method, it is preferable to use a dispersing agent. The use of the dispersing agent has an advantage of making it possible to inhibit adhesion (which may be referred to as blocking) of the resin particles to each other and making it possible to produce expanded particles stably. Examples of the dispersing agent include inorganic substances such as tertiary calcium phosphate, tertiary magnesium phosphate, basic magnesium carbonate, calcium carbonate, barium sulfate, kaolin, talc, clay, aluminum oxide, titanium oxide, and aluminum hydroxide. One of these dispersing agents may be used alone, or two or more thereof may be used in admixture. When two or more dispersing agents are used in admixture, a mixing ratio may be adjusted as appropriate according to the purpose.

The amount of the dispersing agent(s) used is not particularly limited, and is preferably 0.1 parts by weight to 3.0 parts by weight, and more preferably 0.5 parts by weight to 1.5 parts by weight, with respect to 100 parts by weight of the resin particles.

In the present production method, a crosslinking aid may be used to improve the effect of crosslinking efficiency of the aliphatic polyester-based resin. Examples of the crosslinking aid include compounds each having at least one unsaturated bond within a molecule. Among the compounds, particularly, allyl esters, acrylic esters, methacrylic esters, divinyl compounds, and the like are preferable as the crosslinking aid. One of these crosslinking aids may be used alone, or two or more thereof may be used in admixture. When two or more crosslinking aids are used in admixture, a mixing ratio may be adjusted as appropriate according to the purpose.

The amount of the crosslinking aid(s) used is not particularly limited, and is preferably 0.01 parts by weight to 3.00 parts by weight, more preferably 0.03 parts by weight to 1.50 parts by weight, and even more preferably 0.05 parts by weight to 1.00 part by weight, with respect to 100 parts by weight of the resin particles. If the amount of the crosslinking aid(s) used is not less than 0.01 parts by weight with respect to 100 parts by weight of the resin particles, the crosslinking aid(s) exerts a sufficient effect as the crosslinking aid.

In a case where the resin particles are impregnated and reacted with peroxyketal and, if necessary, the crosslinking aid(s) in the dispersion step, it is preferable to lower the concentration of oxygen in the vessel and the amount of dissolved oxygen in the dispersion slurry in order to increase the crosslinking efficiency of the aliphatic polyester-based resin. Examples of a method for reducing the concentration of oxygen in the vessel and the amount of dissolved oxygen in the dispersion slurry include, but are not limited to, replacing a gas in the vessel and the gas dissolved in the dispersion slurry with inorganic gases such as carbon dioxide and nitrogen, and vacuuming the gas in the vessel.

In the present production method, a dispersing aid may be used to improve the effect of inhibiting the adhesion of the resin particles to each other. Examples of the dispersing aid include anionic surfactants such as sodium alkanesulfonate, sodium alkylbenzene sulfonate, and sodium $\alpha$-olefin sulfonate. One of these dispersing aids may be used alone, or two or more thereof may be used in admixture. When two or more dispersing aids are used in admixture, a mixing ratio may be adjusted as appropriate according to the purpose.

The amount of the dispersing aid(s) used is not particularly limited, and is preferably 0.001 parts by weight to 0.500 parts by weight, and more preferably 0.010 parts by weight to 0.200 parts by weight, with respect to 100 parts by weight of the resin particles. In order to further improve the effect of inhibiting the adhesion of the resin particles to each other, it is preferable that the dispersing agent(s) and the dispersing aid(s) be used in combination.

In the present production method, a plasticizer may be used. The use of the plasticizer makes it possible to obtain expanded particles having a high expansion ratio and flexibility.

Examples of the plasticizers that are to be used or are preferably used in the present production method include: glycerin ester-based compounds such as glycerin diacetomonolaurate; citric ester-based compounds such as tributyl acetylcitrate; sebacic ester-based compounds such as dibutyl sebacate; adipic ester-based compounds; polyether ester-based compounds; benzoic ester-based compounds; phthalic ester-based compounds; isosorbide ester-based compounds; polycaprolactone-based compounds; and dibasic ester-based compounds such as benzyl methyl diethylene glycol adipate. Among these, glycerin ester-based compounds, citric ester-based compounds, sebacic ester-based compounds, and dibasic acid ester-based compounds are preferable in that the plasticization effect of P3HA is excellent. One of these plasticizers may be used alone, or two or more thereof may be used in admixture. In a case where two or more plasticizers are used in admixture, a mixing ratio may be adjusted as appropriate according to the purpose.

The amount of the plasticizer used is not particularly limited, and is preferably more than 0 parts by weight and not more than 20 parts by weight, more preferably 1 part by weight to 15 parts by weight, and even more preferably 1 part by weight to 10 parts by weight, with respect to 100 parts by weight of the resin particles. In the dispersion step in accordance with an embodiment of the present invention, the resin particles to be used may already contain a plasticizer. In a case where the resin particles to be used already contain the plasticizer, it is preferable that the total amount of the amount of the plasticizer contained in the resin particles and the amount of the plasticizer used in the dispersion step satisfy the range described above.

(Temperature increase and pressure increase step and holding step)

The present production method preferably includes, following the dispersion step and between the dispersion step and the release step, a temperature increase and pressure increase step of increasing a temperature in the vessel to a certain temperature and increasing a pressure in the vessel to a certain pressure and a holding step of holding the temperature in the vessel at the certain temperature and holding the pressure in the vessel at the certain pressure.

The temperature increase and pressure increase step is preferably carried out after the dispersion step, and the holding step is preferably carried out after the temperature increase and pressure increase step. In the present specification, (a) a certain temperature in the temperature increase and pressure increase step and in the holding step may be referred to as an expansion temperature, and (b) a certain pressure in the temperature increase and pressure increase step and in the holding step may be referred to as an expansion pressure.

The expansion temperature cannot be generally defined because the expansion temperature varies depending on, for example, the type of aliphatic polyester-based resin, the type of blowing agent, a degree of plasticization of the aliphatic polyester-based resin, and a desired expansion ratio of expanded particles. For example, the expansion temperature is preferably 100.0°C to 140.0°C, more preferably 110.0°C to 135.0°C, and more preferably 115.0°C to 133.0°C. In a case where the expansion temperature is not lower than 100°C, it is likely that expanded particles having a high expansion ratio can be obtained. On the other hand, in a case where the expansion temperature is not higher than 140°C, hydrolysis of resin particles in the vessel is unlikely to occur.

In the temperature increase and pressure increase step, a rate at which the temperature is increased to a desired expansion temperature (hereinafter may be referred to as a temperature increase rate) is preferably 1.0°C/min to 3.0°C/min, and more preferably 1.5°C/min to 3.0°C/min. In a case where the temperature increase rate is not lower than 1.0°C/min, excellent productivity is achieved. In a case where the temperature increase rate is not higher than 3.0°C/min, insufficient impregnation of the resin particles with the blowing agent and insufficient reaction of the crosslinking agent and the aliphatic polyester-based resin are unlikely to occur at the increase in temperature.

The expansion pressure is preferably 1.0 MPa to 10.0 MPa (gage pressure), more preferably 2.0 MPa to 5.0 MPa (gage pressure), and more preferably 2.5 MPa to 4.0 MPa. In a case where the expansion pressure is not less than 1.0 MPa (gage pressure), it is possible to obtain expanded particles with a high expansion ratio.

(Release step)

The release step is carried out after the dispersion step, and preferably after the temperature increase and pressure increase step and the holding step which are optionally carried out, following the dispersion step. The release step allows the resin particles to be expanded, with the result that expanded particles are obtained.

In the release step, an "area having a pressure lower than a pressure inside the vessel" is intended to mean an "area under pressure lower than a pressure inside the vessel" or a "space under pressure lower than a pressure inside the vessel", and can also be described as an "atmosphere having a pressure lower than a pressure inside the vessel". The area having a pressure lower than the pressure inside the vessel is not particularly limited, provided that the pressure is lower than the expansion pressure, and may be, for example, an area under atmospheric pressure. Further, in a case where the temperature increase and pressure increase step is carried out, the "pressure inside the vessel" in the release step can also be described as the "expansion pressure".

In the release step, when the dispersion slurry is released into the area having a pressure lower than the pressure inside the vessel, the dispersion slurry can also be released through an open orifice with a diameter of 1 mm to 5 mm for the purpose of, for example, adjusting the flow rate of the dispersion slurry and decreasing variations in the expansion ratio of the resulting expanded particles. In addition, in a case where resin particles with a relatively high melting point are used, the area (space) having a pressure lower than the pressure inside the vessel may be filled with saturated steam for the purpose of improving expandability.

In the release step, a cleaning agent may be used after the resin particles have been expanded. Examples of the cleaning agent include warm water and sodium hexametaphosphate. The use of the cleaning agent makes it possible to adjust the amount of the dispersing agent adhering to the surfaces of the expanded particles.

(Secondary expansion process)

In the above-described method for producing expanded particles, there is a case where expanded particles having a desired apparent density cannot be obtained by the expansion process alone. In that case, the present production method may further include a secondary expansion process to further expand the expanded particles obtained in the expansion process. The secondary expansion process is not particularly limited, provided that, by further expanding the expanded particles having been obtained in the expansion process, expanded particles having an apparent density even lower than the apparent density of the expanded particles having been obtained in the expansion process can be obtained. For example, an aspect of the secondary expansion process is as follows: (c1) the expanded particles having been obtained in the expansion process are supplied into the vessel; (c2) the inorganic gas, such as air or carbon dioxide, is supplied into the vessel to increase the pressure in the vessel; (c3) by (c2) above, the expanded particles are impregnated with the inorganic gas to make the pressure in the expanded particles higher than normal pressure; and (c4) then, the expanded particles are further expanded by heating with steam or the like to obtain expanded particles having a desired apparent density. The expanded particles obtained in the secondary expansion process may be referred to as secondary expanded particles. In addition, in a case where the secondary expansion process is carried out, the expansion process may be referred to as first expansion process, and the expanded particles obtained in the first expansion process may be referred to as first expanded particles.

The internal pressure of the expanded particles in the secondary expansion process is preferably 0.15 MPa to 0.60 MPa (absolute pressure), and more preferably 0.20 MPa to 0.50 MPa (absolute pressure).

A temperature in the vessel when the expanded particles are impregnated with the inorganic gas in the secondary expansion process (in c2 and c3 above) is preferably 10°C to 90°C, more preferably 20°C to 90°C, more preferably 30°C to 90°C, and even more preferably 40°C to 90°C.

In the secondary expansion process (in c4 above), the pressure of steam or the like for heating the expanded particles (hereinafter may be referred to as a "secondary expansion pressure") varies depending on the properties of the expanded particles to be used and a desired apparent density and cannot be generally defined. The secondary expansion pressure is preferably 0.01 MPa to 0.17 MPa (gage pressure), and more preferably 0.03 MPa to 0.11 MPa (gage pressure).

The gel fraction of the secondary expanded particles preferably has the same aspect as the gel fraction of the expanded particles. That is, the description in the (Gel fraction) section described above can be employed, as appropriate, for the gel fraction of the secondary expanded particles.

[4. Aliphatic polyester-based foamed molded product]

An aliphatic polyester-based foamed molded product in accordance with an embodiment of the present invention is composed of aliphatic polyester-based expanded particles in accordance with an embodiment of the present invention. The aliphatic polyester-based foamed molded product in accordance with an embodiment of the present invention may be molded from the aliphatic polyester-based expanded particles in accordance with an embodiment of the present invention. The aliphatic polyester-based foamed molded product in accordance with an embodiment of the present invention may contain the aliphatic polyester-based expanded particles in accordance with an embodiment of the present invention. This configuration makes it possible to provide an aliphatic polyester-based foamed molded product that has a high expansion ratio.

A method for producing the present foamed molded product (i.e., a method for subjecting expanded particles to molding) is not particularly limited, and a known method can be employed. Examples of such a method include, but are not particularly limited to, the following in-mold foam molding methods (A) to (D):

(A) a method in which after the present expanded particles are pressurized with inorganic gas in a vessel so that the expanded particles are impregnated with the inorganic gas and given a predetermined internal pressure, the expanded particles are introduced to fill a mold and heated with steam;

(B) a method in which the present expanded particles are introduced to fill a mold, compressed to reduce the volume in the mold by 10% to 75%, and heated with steam;

(C) a method in which the present expanded particles are compressed with gas pressure, introduced to fill a mold, and heated with steam while recovery force of the expanded particles is utilized; and

(D) a method in which without any particular pretreatment, the present expanded particles are introduced to fill a mold and heated with steam.

In production of the present foamed molded product, the pressure of steam for heating the present expanded particles (hereinafter may be referred to as a molding pressure) varies depending on the properties of the expanded particles to be used and the like and cannot be generally defined. The molding pressure is preferably 0.05 MPa to 0.30 MPa (gage pressure), more preferably 0.08 MPa to 0.25 MPa (gage pressure), and even more preferably 0.10 MPa to 0.20 MPa (gage pressure).

As the inorganic gas in the method (A) among the production methods for the present foamed molded product, at least one selected from the group consisting of air, nitrogen, oxygen, carbon dioxide, helium, neon, argon, and the like can be used. Among these inorganic gases, air and/or carbon dioxide is preferable.

A temperature in the vessel when the expanded particles are impregnated with the inorganic gas in the method (A) among the production methods for the present foamed molded product is preferably 10°C to 90°C, more preferably 20°C to 90°C, more preferably 30°C to 90°C, and even more preferably 40°C to 90°C.

The internal pressure of the expanded particles in the method (A) among the production methods for the present foamed molded product is preferably 0.10 MPa to 0.30 MPa (absolute pressure), more preferably 0.11 MPa to 0.25 MPa (absolute pressure), and even more preferably 0.12 MPa to 0.20 MPa (absolute pressure). Measurement of the internal pressure of the expanded particles is carried out in accordance with the measurement method described in the Examples which will be described later.

The compressive strength of the present foamed molded product is not generally limited because the compressive strength varies depending on the type of aliphatic polyester-based resin, the density of the foamed molded product, and the like. The compressive strength at 25% compression is preferably not less than 0.18 MPa, more preferably not less than 0.19 MPa, and even more preferably not less than 0.20 MPa. This configuration makes it possible to provide an aliphatic polyester-based foamed molded product that has a high compressive strength.

[4. Applications]

An embodiment of the present invention is suitably applicable in the fields including: cushioning materials for packaging (for example, including: cushioning materials for packaging household electric appliances such as refrigerators, freezers, air conditioner bodies, outdoor units of air conditioner bodies, washing machines, air purifiers, humidifiers, rice cookers, microwave ovens, ovens, toasters, electric fans, and units for storage batteries; and cushioning materials for packaging automotive parts such as transmissions, roofs, hoods, doors, batteries, and engines); automotive components (for example, including bumper core materials, headrests, luggage boxes, tool boxes, floor spacers, seat core materials, child seat core materials, sun visor core materials, and kneepads); heat insulating materials (for example, including containers for constant-temperature storage and containers for constant-temperature transport); casting pattern applications; produce boxes; fish boxes; building materials; and civil engineering materials.

[5. Others]

The present invention can be configured as follows:
(1) A method for producing aliphatic polyester-based expanded particles, the method including the steps of: dispersing, in a vessel, aliphatic polyester-based resin particles and a blowing agent into an aqueous dispersion medium, the aliphatic polyester-based resin particles including an aliphatic polyester-based resin and having been cross-linked by peroxyketal; and releasing, by opening one end of the vessel, a dispersion slurry in the vessel into an area having a pressure lower than a pressure inside the vessel.
(2) The method according to (1), wherein the peroxyketal is used in an amount of 0.5 parts by weight to 5 parts by weight with respect to 100 parts by weight of the aliphatic polyester-based expanded particles.
(3) The method according to (1) or (2), wherein the peroxyketal is at least one selected from the group consisting of 1,1-di(t-butylperoxv)cyclohexane, 2,2-di(t-butylperoxy)butane, n-butyl 4,4-(t-butylperoxy)valerate, 2,2-di(4,4-di(t-butylperoxy)cyclohexyl)propane and 1,1-di(t-hexylperoxy)cyclohexane.
(4) The method according to any one of (1) to (3), wherein the aliphatic polyester-based resin includes a poly(3-hydroxyalkanoate)-based resin.
(5) The method according to (4), wherein the poly(3-hydroxyalkanoate)-based resin is at least one selected from the group consisting of poly(3-hydroxybutyrate), poly(3-hydroxybutyrate-co-3-hydroxyvalerate), poly(3-hydroxy butyrate-co-3-hydroxy valerate-co-3-hydroxyhexanoate), poly(3-hydroxybutyrate-co-3-hydroxyhexanoate), and poly(3-hydroxybutyrate-co-4-hydroxybutyrate).
(6) The method according to (4) or (5), wherein: the poly(3-hydroxyalkanoate)-based resin is a copolymer having a 3-hydroxybutyrate unit and a comonomer unit; and a ratio of the 3HB unit to the comonomer unit (the 3HB unit/the comonomer unit) in 100 mol% of all repeating units in the copolymer is 99/1 (mol%/mol%) to 85/15 (mol%/mol%),
(7) The method according to any one of (4) to (6), wherein not less than 50% by weight of the poly(3-hydroxyalkanoate)-based resin is contained in 100% by weight of the aliphatic polyester-based resin.
(8) The method according to any one of (1) to (7), wherein the blowing agent is at least one selected from the group consisting of an inorganic gas, a saturated hydrocarbon having 3 to 5 carbon atoms, an ether, a halogenated hydrocarbon, and water.
(9) The method according to (8), wherein the inorganic gas is carbon dioxide.

Examples

The following description will discuss the present invention in more detail with reference to Examples. Note, however, that these Examples do not limit the technical scope of the present invention.

[Materials]

Substances used in the Examples and Comparative Examples are presented below.

(Aliphatic polyester-based resin)

P3HA: prepared by a method of Production Example 1 described below.
PBS: polybutylene succinate (BioPBS FZ91 manufactured by Mitsubishi Chemical Corporation)
PBAT: polybutylene succinate adipate (Ecoflex F Blend C1200 manufactured by BASF SE).

(Non-ionic water-soluble polymer)

Non-ionic water-soluble polymer: polyalkylene oxide (PLONON 208 manufactured by NOF CORPORATION; 80% by weight of ethylene oxide; average molecular weight: 10000; hydrophobic group: oxypropylene group)

(Cell adjusting agent)

Cell adjusting agent: talc (Talcan Powder PK-S manufactured by Hayashi-Kasei Co., Ltd.)

(Nucleating agent)

Nucleating agent: pentaerythritol (Neulizer P manufactured by Mitsubishi Chemical Corporation)

(Lubricant)

Lubricant 1: behenic acid amide (Crodamide (registered trademark) BR manufactured by CRODA)
Lubricant 2: erucic acid amide (Crodamide (registered trademark) ER manufactured by CRODA)

(Dispersing agent)

Dispersing agent: tertiary calcium phosphate (manufactured by TAIHEI CHEMICAL INDUSTRIAL CO., LTD.)

(Dispersing aid)

Dispersing aid: sodium alkylsulfonate (LATEMUL (registered trademark) PS manufactured by Kao Corporation)

(Crosslinking agent)

Peroxyketal-1: 1,1 -di(t-butylperoxy)cyclohexane (PERHEXA (registered trademark) C-80(S) manufactured by NOF CORPORATION, purity: 80%),
Peroxyketal-2: 2,2-di(t-butylperoxy)butane (PERHEXA (registered trademark) 22 manufactured by NOF CORPORATION, purity: 50%),
Peroxycarbonate: t-butylperoxy-2-ethylhexyl carbonate (content: 97%) (PERBUTYL (registered trademark) E manufactured by NOF CORPORATION, purity: 97%), and
Diacyl peroxide: benzoyl peroxide (NYPER BW manufactured by NOF CORPORATION, purity: 75%).

(Cleaning agent)

Cleaning agent: sodium hexametaphosphate (manufactured by WUXI LOTUS ESSENCE)

(Antistatic agent)

Antistatic agent: coconut oil fatty acid diethanolamide (PROFAN 128 EXTRA manufactured by Sanyo Chemical Industries, Ltd.)

[Measurement method]

Evaluation methods carried out in Examples and Comparative Examples are described below.

(Measurement of melting point of aliphatic polyester-based resin particles)

Approximately 5 mg of aliphatic polyester-based resin particles were weighed out with use of a differential scanning calorimeter (DSC7020 manufactured by Hitachi High-Tech Science Corporation). Then, in a DSC curve obtained when the temperature of the aliphatic polyester-based resin particles was increased from 10°C to 190°C at a temperature increase rate of 10°C/min, a temperature at the highest melting peak was assumed to be a melting point.

(Measurement of MFR of aliphatic polyester-based resin particles)

With use of Melt Flow Index Tester (manufactured by Yasuda Seiki Seisakusho Ltd.), measurement was carried out, in accordance with JIS K7210, under the conditions in which a load was 5 kg, and a measurement temperature was a temperature 5°C to 10°C higher than a melting end temperature as read from the DSC curve obtained in (Measurement of melting point of aliphatic polyester-based resin particles) above.

(Measurement of weight per aliphatic polyester-based resin particles)

After 100 aliphatic polyester-based resin particles were prepared, the weight Wp (mg) of these particles was measured. The weight per particle was obtained by Wp/ 100 (mg).

(Measurement of length/diameter ratio of aliphatic polyester-based resin particles)

The length and diameter of an aliphatic polyester-based resin particle was measured by a digital vernier caliper (manufactured by Mitutoyo Corporation), and a length/diameter ratio was calculated. The length corresponds to an MD direction in which a resin composition is discharged from a nozzle of an extruder.

(Measurement of specific gravity of aliphatic polyester-based resin particles)

With use of an automatic densimeter (DSG-1 manufactured by Toyo Seiki Seisaku-sho Ltd.), a specific gravity (g/cm$^3$) of aliphatic polyester-based resin particles was measured by a method of collecting gas over water in accordance with JIS K7112.

(Measurement of apparent density of aliphatic polyester-based expanded particles)

A method for measuring an apparent density of aliphatic polyester-based expanded particles was as below in (1) to (3). (1) A graduated cylinder containing ethanol was prepared, and aliphatic polyester-based expanded particles having a weight Wd (g) were submerged in the ethanol. (2) A volume of the aliphatic polyester-based expanded particles read from an elevation of liquid level of ethanol (submersion method) was assumed to be Vd (cm$^3$). (3) The apparent density $\rho$d of the aliphatic polyester-based expanded particles was calculated by the following formula:

$$\text{Apparent density } \rho d \text{ (g/cm}^3\text{)} = Wd/Vd.$$

(Measurement of expansion ratio of aliphatic polyester-based expanded particles)

An expansion ratio of aliphatic polyester-based expanded particles was calculated by the following formula:

Expansion ratio (times) = Specific gravity of aliphatic polyester- based resin particles/Apparent density $\rho$d of aliphatic polyester-based expanded particles.

(Measurement of gel fraction of aliphatic polyester-based expanded particles)

A method for measuring a gel fraction of aliphatic polyester-based expanded particles was as below in (b1) to (b5). (b1) In a 100-ml flask, 0.5 g of aliphatic polyester-based expanded particles and 50 ml of chloroform were placed. (b2) A mixture in the flask was heat-refluxed for 8 hours at 62°C under atmospheric pressure. (b3) A resulting heat-treated product was filtered with use of a suction filtration device equipped with a 100-mesh metal gauze. (b4) A filtration-treated product on the metal gauze was dried in an oven at 80°C for 8 hours, and a dried product weight Wg (g) was measured. (b5) The gel fraction was calculated by the following formula:

$$\text{Gel fraction (\% by weight)} = Wg/0.5 \times 100.$$

(Measurement of high temperature-side heat quantity of aliphatic polyester-based expanded particles)

A high temperature-side heat quantity of aliphatic polyester-based expanded particles was measured with use of a differential scanning calorimeter (DSC7020 manufactured by Hitachi High-Tech Science Corporation). A specific operating procedure was as below in (1) to (5). (1) Approximately 5 mg of aliphatic polyester-based expanded particles were weighed out. (2) By increasing the temperature of the aliphatic polyester-based expanded particles from 10°C to 190°C at a temperature increase rate of 10°C/min, the aliphatic polyester-based expanded particles were melted. (3) On the DSC curve obtained in the above-described process (2), a point representing a temperature before the melting started and a point representing a temperature after the melting ended were connected to create a baseline. (4) A straight line passing through a maximum point between a melting peak on the high temperature side or the highest melting peak and a melting peak adjacent thereto was drawn in a direction perpendicular to the X-axis. (5) A heat quantity calculated from a high temperature side area enclosed by the baseline, the straight line passing through the maximum point, and the DSC curve was assumed to be the high temperature-side heat quantity.

(Measurement of average cell diameter of aliphatic polyester-based expanded particles)

A method for measuring an average cell diameter of an expanded particle was as below in (1) to (4). (1) An expanded particle was cut with use of a blade razer (two-edged blade of high stainless steel manufactured by FEATHER Safety Razor Co., Ltd.) in such a manner that the razor passed through the center of the expanded particle. (2) A cut surface of the expanded particle thus obtained was observed with use of a digital microscope (VHX-8000 manufactured by Keyence Corporation) at a magnification of 50 times. (3) In an image thus obtained through the observation, a straight line was drawn so as to pass through the center of the cut surface of the expanded particle or substantially the center of the cut surface of the expanded particle. (4) (4-1) The number n of cells present on the straight line was counted, and (4-2) a length of a line segment cut from the straight line by points at which the straight line and a surface of the expanded particle intersected with each other was measured and assumed to be an expanded particle diameter L. (5) The average cell diameter of the expanded particle was calculated by the following formula:

$$\mathrm{Average\ cell\ diameter\ (\mu m)\ =\ L/n.}$$

(Measurement of closed cell ratio of aliphatic polyester-based expanded particles)

A method for measuring a closed cell ratio of aliphatic polyester-based expanded particles was in accordance with the method described in Procedure C (PROSEDURE C) in ASTMD 2856-87. First, with use of an air comparison pycnometer (Model 1000 manufactured by Tokyo Science Co., Ltd.), a volume Vc ($cm^3$) was measured. Next, the whole expanded particles the volume Vc of which had been measured were submerged in a graduated cylinder containing ethanol. Then, the apparent volume Va ($cm^3$) of the expanded particles was determined from an elevation of liquid level in the graduated cylinder (submersion method). The closed cell ratio of the expanded particles was determined on the basis of 100 - (Va - Vc) $\times$ 100/Va (%).

(Measurement of length / diameter ratio of aliphatic polyester-based expanded particles)

The length and diameter of an aliphatic polyester-based expanded particle were measured by a digital vernier caliper (manufactured by Mitutoyo Corporation), and a length/diameter ratio was calculated. The length corresponds to an MD direction in which a resin composition is discharged from a nozzle of an extruder.

(Measurement of internal pressure of aliphatic polyester-based expanded particles)

A method for measuring an internal pressure of aliphatic polyester-based expanded particles was as below in (1) to (5). (1) A weight Wl (g) of aliphatic polyester-based expanded particles after a pressurization process was measured. (2) The expanded particles were heated at 150°C for 30 minutes to dissipate inorganic gas in the expanded particles. (3) A weight W2 (g) of the aliphatic polyester-based expanded particles having undergone dissipation of inorganic gas was measured again. (4) A weight ($\Delta$W) of inorganic gas was calculated from a weight difference (W1-W2) between the aliphatic polyester-based expanded particles before the dissipation of inorganic gas and the aliphatic polyester-based expanded particles after the dissipation of inorganic gas. (5) An internal pressure P (MPa) of the aliphatic polyester-based expanded particles was calculated by the state equation of ideal gas, specifically, the following equation:

Internal pressure P (MPa) = (1 + $\Delta$W/M $\times$ 0.082 $\times$ (273 + T) $\times$ ($\rho$d $\times$ 1000/W2))/9.87, wherein M is an average molar molecular weight, T is a temperature (room temperature) (°C) when the weight of the aliphatic polyester-based expanded particles after the pressurization process was measured, and $\rho$d is an apparent density (g/$cm^3$) of the aliphatic polyester-based expanded particles (expanded particles having the weight W1) after the pressurization process.

(Measurement of expansion ratio of aliphatic polyester-based foamed molded product)

A method for measuring an expansion ratio of an aliphatic polyester-based foamed molded product was as below in (1) to (4). (1) With use of a digital vernier caliper (manufactured by Mitutoyo Corporation), respective lengths (mm) of a resulting aliphatic polyester-based foamed molded product in longitudinal, lateral, and thickness directions thereof were measured, and a volume V (cm$^3$) of the aliphatic polyester-based foamed molded product was calculated. (2) A weight W (g) of the foamed molded product was measured. (3) A density $\rho$ of the aliphatic polyester-based foamed molded product was calculated on the basis of the following formula: Density $\rho$ (g/cm$^3$) = W/V. (4) An expansion ratio of the foamed molded product was calculated on the basis of the following formula: Expansion ratio (times) = specific gravity of resin particles/density $\rho$ of foamed molded product.

(Measurement of compressive strength of aliphatic polyester-based foamed molded product)

In a method for measuring a compressive strength of an aliphatic polyester-based foamed molded product, the compressive strength at 25% strain and the compressive strength at 50% strain were obtained, in accordance with JIS K 6767, with use of a tensile and compression testing machine (TG-50kN manufactured by Minebea Co., Ltd.).

[Production Example 1] Preparation of P3HA

P3HA was prepared by the method disclosed in International Publication No. WO 2018/070492. At this time, 1 part by weight of the non-ionic water-soluble polymer (PLONON 208 manufactured by NOF CORPORATION) was used with respect to 100 parts by weight of the P3HA. A resulting P3HA contained (a) P3HB3HH having a monomer ratio of 3HB/3HH = 95/5 (mol%/mol%) and a weight average molecular weight of 0.6 million and (b) 1 part by weight of the non-ionic water-soluble polymer with respect to 100 parts by weight of the P3HB3HH.

[Example 1]

(Production of aliphatic polyester-based resin particles)

P3HA was used, weighing was carried out so that P3HA was 100.0 parts by weight, a cell adjusting agent was 0.10 parts by weight, a nucleating agent was 1.0 part by weight, the lubricant 1 was 0.10 parts by weight, and the lubricant 2 was 0.10 parts by weight, and a mixture was obtained with use of Supermixer (SMV (G)-100 manufactured by Kawata MFG Co., Ltd.). The mixture was melted and kneaded at a cylinder setting temperature of 130°C to 160°C with use of a twin screw extruder (TEM-26SX manufactured by Toshiba Machine Co., Ltd.) and discharged from a nozzle of a die attached to a tip of the extruder. After a melted P3HA-based composition at 180°C discharged from the nozzle had been water-cooled at 43°C, a trace amount of a water-diluted antistatic agent was applied to a surface of a strand of the P3HA-based composition (100 parts by weight). After that, the strand was cut. Resulting aliphatic polyester-based resin particles weighed 2.0 mg per particle, had a length/diameter ratio of 2.0, and had a melting point of 145°C. In addition, the resin particles had an MFR of 2.2 g/10 min as measured at 160°C and under 5 kgf.

(Production of aliphatic polyester-based expanded particles)

After 100 parts by weight of the resulting aliphatic polyester-based resin particles, 200 parts by weight of pure water, 1.0 part by weight of the dispersing agent, 0.1 parts by weight of the dispersing aid, and 2.7 parts by weight of peroxyketal were introduced in a pressure-resistant vessel under stirring, aeration with carbon dioxide was sufficiently carried out, so that oxygen in the pressure-resistant vessel was removed. Next, carbon dioxide was introduced as a blowing agent into the pressure-resistant vessel. After that, the temperature of a dispersion slurry in the pressure-resistant vessel was increased to an expansion temperature of 128.5°C. After that, additional carbon dioxide was introduced to increase the pressure to an expansion pressure of 3.3 MPa (gage pressure), and a temperature around the expansion temperature and a pressure around the expansion pressure were held for 40 minutes. During the above operation, (i) at least part of the aliphatic polyester-based resin particles react with at least part of the peroxyketal, so that aliphatic polyester-based resin particles cross-linked by peroxyketal were obtained and (ii) a dispersion step in which the aliphatic polyester-based resin particles cross-linked by peroxyketal and the blowing agent were dispersed in water was carried out. After that, a valve at the bottom of the pressure-resistant vessel was opened, and the dispersion slurry in the pressure-resistant vessel was released through an opening orifice of 3.6 mm in diameter under atmospheric pressure (release step), so that aliphatic polyester-based expanded particles were obtained. The dispersing agent adhering to the surfaces of the expanded particles was removed to some extent with a water-diluted cleaning agent and warm water, and drying was carried out at 80°C. At this time, a trace amount of water-diluted antistatic agent was sprayed to the aliphatic polyester-based expanded particles to inhibit the electrostatics of the aliphatic polyester-based expanded particles. As for the resulting aliphatic polyester-based expanded particles, the closed cell ratio was 96%, the apparent density was 67 g/L, the gel fraction was 73% by weight, the high temperature-side heat quantity was 5 J / g, the length/diameter ratio was 1.0, and the cell diameter was 231 μm. The composition, production method, and physical properties of the aliphatic polyester-based expanded particles were summarized in Table 1.

(Production of aliphatic polyester-based foamed molded product)

The resulting aliphatic polyester-based expanded particles were introduced in a pressure-resistant vessel heated to 80°C, and the internal pressure of the aliphatic polyester-based expanded particles was set to 0.15 MPa (absolute pressure) by pressurization treatment with air. The expanded particles were introduced to fill a mold measuring 370 mm long by 320 mm wide by 60 mm thick in a molding machine (EP-900L-M5 manufactured by DAISEN). Next, the aliphatic polyester-based expanded particles were heated for 5 seconds to 10 seconds by heated steam at a pressure of 0.15 MPa (gage pressure) to obtain an aliphatic polyester-based foamed molded product. After that, the foamed molded product was dried at 75°C. The results of evaluation on the aliphatic polyester-based foamed molded product are summarized in Table 1.

[Examples 2 to 4 and Comparative Examples 1 to 6]

Aliphatic polyester-based resin particles, aliphatic polyester-based expanded particles, and aliphatic polyester-based foamed molded products were prepared as in Example 1 except that respective types of the aliphatic polyester-based resin to be used and the crosslinking agent, the amount of crosslinking agent used, the presence/absence of use of the blowing agent, and the expansion conditions were changed as shown in Table 1, and evaluation was carried out as in Example 1. The composition, production method, and physical properties of each type of the expanded particles and the results of evaluation on each of the foamed molded products were summarized in Table 1.

Note that in Example 1 and Comparative Example 1, the production conditions (e.g., expansion condition and holding time) and the amount of the crosslinking agent used were changed in consideration of purity of commercially available crosslinking agents so that the gel fractions of the aliphatic polyester-based expanded particles become substantially equal to each other.

[Example 5]

(Production of cross-linked aliphatic polyester-based resin particles)

After 100 parts by weight of the aliphatic polyester-based resin particles obtained in production of the aliphatic polyester-based resin particles in Example 1, 150 parts by weight of pure water, 0.5 parts by weight of the dispersing agent, 0.05 parts by weight of the dispersing aid, and 3.0 parts by weight of peroxyketal were introduced in a pressure-resistant vessel under stirring, aeration with carbon dioxide was sufficiently carried out, so that oxygen in the pressure-resistant vessel was removed. After that, the temperature of a dispersion slurry in the pressure-resistant vessel was increased to an expansion temperature of 130.0°C. Thereafter, the temperature was maintained at a temperature close to 130.0°C for 30 minutes. After that, a valve at the bottom of the pressure-resistant vessel was opened, and the dispersion slurry in the pressure-resistant vessel was released through an opening orifice of 30.0 mm in diameter under atmospheric pressure, so that non-expanded aliphatic polyester-based resin particles cross-linked by peroxyketal were obtained. Moisture adhering to the surfaces of the resin particles was removed to some extent with use of a centrifugal dehydrator, and drying was carried out at 80°C.

(Production of aliphatic polyester-based expanded particles)

After 100 parts by weight of the resulting cross-linked aliphatic polyester-based resin particles, 200 parts by weight of pure water, 0.5 parts by weight of the dispersing agent, and 0.05 parts by weight of the dispersing aid were introduced in a pressure-resistant vessel under stirring (dispersion step), aeration with carbon dioxide was sufficiently carried out, so that oxygen in the pressure-resistant vessel was removed. Next, carbon dioxide was introduced as a blowing agent into the pressure-resistant vessel. After that, the temperature of a dispersion slurry in the pressure-resistant vessel was increased to an expansion temperature of 129.0°C. After that, additional carbon dioxide was introduced to increase the pressure to an expansion pressure of 3.3 MPa (gage pressure), and a temperature around the expansion temperature and a pressure around the expansion pressure were held for 15 minutes. After that, a valve at the bottom of the pressure-resistant vessel was opened, and the dispersion slurry in the pressure-resistant vessel was released through an opening orifice of 3.6 mm in diameter under atmospheric pressure (release step), so that aliphatic polyester-based expanded particles were obtained. The dispersing agent adhering to the surfaces of the expanded particles was removed to some extent with a water-diluted cleaning agent and warm water, and drying was carried out at 80°C. At this time, a trace amount of water-diluted antistatic agent was sprayed to the aliphatic polyester-based expanded particles to inhibit the electrostatics of the aliphatic polyester-based expanded particles. The composition, production method, and physical properties of the aliphatic polyester-based expanded particles thus obtained were summarized in Table 1.

(Production of aliphatic polyester-based foamed molded product)

After with use of the aliphatic polyester-based expanded particles obtained, an aliphatic polyester-based foamed molded product was obtained as in Example 1, the foamed molded product was dried at 75°C. The results of evaluation on the aliphatic polyester-based foamed molded product are summarized in Table 1.

[Table 1]

| | | | Example 1 | Example 2 | Example 3 | Example 4 | Example 5 | Comparative Example 1 | Comparative Example 2 | Comparative Example 3 | Comparative Example 4 | Comparative Example 5 | Comparative Example 6 |
|---|---|---|---|---|---|---|---|---|---|---|---|---|---|
| Aliphatic polyester-based resin | P3HA | parts by weight | 100 | 100 | 90 | 90 | – | 100 | 100 | 100 | 100 | 90 | 90 |
| | PBS | parts by weight | – | – | 10 | - | – | – | – | – | – | 10 | – |
| | PBAT | parts by weight | – | – | – | 10 | – | – | – | – | – | – | 10 |
| | Cross-linked P3HA | parts by weight | – | – | – | – | 100 | – | – | – | – | – | – |
| Crosslinking agent | Peroxyketal-1 | parts by weight | 2.7 | – | 2.7 | 2.7 | – | – | – | – | 2.7 | – | – |
| | Peroxyketal-2 | parts by weight | – | 3.8 | – | – | – | – | – | – | – | – | – |
| | Peroxycarbonate | parts by weight | – | – | – | – | – | 2.1 | – | – | – | 2.1 | 2.1 |
| | Diacyl peroxide | parts by weight | – | – | – | – | – | – | 2.1 | – | – | – | – |
| Blowing agent | Carbon dioxide | present/absent | present | present | present | present | present | present | present | present | absent | present | present |
| Expansion condition | Expansion temperature | °C | 128.5 | 130 | 128 | 128 | 129 | 129.5 | 128 | 129 | 128.5 | 129 | 129 |
| | Holding time | min | 40 | 70 | 40 | 40 | 15 | 60 | 15 | 60 | 40 | 60 | 60 |
| Expanded particles | Closed cell ratio | % | 96 | 96 | 95 | 96 | 96 | 94 | 94 | 94 | – | 93 | 94 |
| | Apparent density | g/L | 67 | 66 | 66 | 68 | 67 | 67 | 66 | 67 | 1203 | 67 | 68 |
| | Gel fraction | wt% | 73 | 72 | 69 | 76 | 73 | 73 | 71 | 0 | – | 67 | 74 |
| | High temperature-side heat quantity | J/g | 5 | 2 | 4 | 4 | 5 | 5 | 4 | 14 | – | 4 | 4 |
| Molded product | Density | g/L | 47 | 46 | 46 | 48 | 47 | 47 | 46 | – | – | 47 | 48 |
| | 25% compression strength | MPa | 0.20 | 0.20 | 0.19 | 0.18 | 0.20 | 0.18 | 0.17 | – | – | 0.17 | 0.16 |
| | 50% compression strength | MPa | 0.25 | 0.24 | 0.23 | 0.22 | 0.25 | 0.23 | 0.22 | – | – | 0.20 | 0.19 |

[Discussion]

The following are found from Table 1.

(1) It is clear from Example 1 that in a case where aliphatic polyester-based expanded particles are prepared with use of an aliphatic polyester-based resin and peroxyketal, the aliphatic polyester-based expanded particles obtained have a high closed cell ratio. It is also clear that in a case where an aliphatic polyester-based foamed molded product is prepared with use of the aliphatic polyester-based expanded particles, the aliphatic polyester-based foamed molded product obtained has excellent compressive strength.

(2) It is clear from Comparative Example 1 that in a case where aliphatic polyester-based expanded particles are prepared with use of an aliphatic polyester-based resin and peroxycarbonate, the aliphatic polyester-based expanded particles obtained have a lower closed cell ratio than those in Example 1. It is also clear that in a case where an aliphatic polyester-based foamed molded product is prepared with use of the aliphatic polyester-based expanded particles, the aliphatic polyester-based foamed molded product obtained has a compressive strength inferior to that in Example 1.

(3) It is clear from Comparative Example 2 that in a case where aliphatic polyester-based expanded particles are prepared with use of an aliphatic polyester-based resin and diacyl peroxide, the aliphatic polyester-based expanded particles obtained have a lower closed cell ratio than those in Example 1. It is also clear that in a case where an aliphatic polyester-based foamed molded product is prepared with use of the aliphatic polyester-based expanded particles, the aliphatic polyester-based foamed molded product obtained has a compressive strength inferior to that in Example 1.

(4) In Comparative Example 3, aliphatic polyester-based expanded particles were prepared with use of an aliphatic polyester-based resin and without use of a crosslinking agent. It is clear that the aliphatic polyester-based expanded particles obtained have a lower closed cell ratio than those in Example 1. Further, although in-mold foam molding was carried out with use of the aliphatic polyester-based expanded particles, it was not possible to obtain a favorable aliphatic polyester-based foamed molded product.

(5) In Comparative Example 4, although preparation of aliphatic polyester-based expanded particles was attempted with use of an aliphatic polyester-based resin and peroxycarbonate and without use of a blowing agent, it was not possible to obtain an expanded aliphatic polyester-based resin.

Industrial Applicability

The present invention is suitably applicable in the fields including: cushioning materials for packaging (for example, including: cushioning materials for packaging household electric appliances such as refrigerators, freezers, air conditioner bodies, outdoor units of air conditioner bodies, washing machines, air purifiers, humidifiers, rice cookers, microwave ovens, ovens, toasters, electric fans, and units for storage batteries; and cushioning materials for packaging automotive parts such as transmissions, roofs, hoods, doors, batteries, and engines); automotive components (for example, including bumper core materials, headrests, luggage boxes, tool boxes, floor spacers, seat core materials, child seat core materials, sun visor core materials, and kneepads); heat insulating materials (for example, including containers for constant-temperature storage and containers for constant-temperature transport); casting pattern applications; produce boxes; fish boxes; building materials; and civil engineering materials.

**Claims**

**1.** A method for producing aliphatic polyester-based expanded particles, the method comprising the steps of:

dispersing, in a vessel, aliphatic polyester-based resin particles and a blowing agent into an aqueous dispersion medium, the aliphatic polyester-based resin particles including an aliphatic polyester-based resin and having been cross-linked by peroxyketal; and
releasing, by opening one end of the vessel, a dispersion slurry in the vessel into an area having a pressure lower than a pressure inside the vessel.

**2.** The method according to claim 1, wherein the peroxyketal is used in an amount of 0.5 parts by weight to 5 parts by weight with respect to 100 parts by weight of the aliphatic polyester-based expanded particles.

**3.** The method according to claim 1 or 2, wherein the peroxyketal is at least one selected from the group consisting of 1,1-di(t-butylperoxy)cyclohexane, 2,2-di(t-butylperoxy)butane, n-butyl 4,4-(t-butylperoxy)valerate, 2,2-di(4,4-di(t-butylperoxy)cyclohexyl)propane and 1,1-di(t-hexylperoxy)cyclohexane.

4. The method according to claim 1 or 2, wherein the aliphatic polyester-based resin includes a poly(3-hydroxyalkanoate)-based resin.

5. The method according to claim 1 or 2, wherein the poly(3-hydroxyalkanoate)-based resin is at least one selected from the group consisting of poly(3-hydroxybutyrate), poly(3-hydroxybutyrate-co-3-hydroxyvalerate), poly(3-hydroxybutyrate-co-3-hydroxyvalerate-co-3-hydroxyhexanoate), poly(3-hydroxybutyrate-co-3-hydroxyhexanoate), and poly(3-hydroxybutyrate-co-4-hydroxybutyrate).

6. The method according to claim 1 or 2, wherein:

the poly(3-hydroxyalkanoate)-based resin is a copolymer having a 3-hydroxybutyrate unit and a comonomer unit; and
a ratio of the 3HB unit to the comonomer unit (the 3HB unit/the comonomer unit) in 100 mol% of all repeating units in the copolymer is 99/1 (mol%/mol%) to 85/15 (mol%/mol%).

7. The method according to claim 4, wherein not less than 50% by weight of the poly(3-hydroxyalkanoate)-based resin is contained in 100% by weight of the aliphatic polyester-based resin.

8. The method according to claim 1, wherein the blowing agent is at least one selected from the group consisting of an inorganic gas, a saturated hydrocarbon having 3 to 5 carbon atoms, an ether, a halogenated hydrocarbon, and water.

9. The method according to claim 8, wherein the inorganic gas is carbon dioxide.

| | INTERNATIONAL SEARCH REPORT | International application No. |
|---|---|---|
| | | **PCT/JP2023/007215** |

**A. CLASSIFICATION OF SUBJECT MATTER**

***C08J 9/18***(2006.01)i
FI: C08J9/18 CFD; C08J9/18 ZBP

According to International Patent Classification (IPC) or to both national classification and IPC

**B. FIELDS SEARCHED**

Minimum documentation searched (classification system followed by classification symbols)

C08J9/00-9/42; B29C44/00-44/60

Documentation searched other than minimum documentation to the extent that such documents are included in the fields searched

Published examined utility model applications of Japan 1922-1996
Published unexamined utility model applications of Japan 1971-2023
Registered utility model specifications of Japan 1996-2023
Published registered utility model applications of Japan 1994-2023

Electronic data base consulted during the international search (name of data base and, where practicable, search terms used)

**C. DOCUMENTS CONSIDERED TO BE RELEVANT**

| Category* | Citation of document, with indication, where appropriate, of the relevant passages | Relevant to claim No. |
|---|---|---|
| A | JP 2020-164676 A (SEKISUI PLASTICS CO., LTD.) 08 October 2020 (2020-10-08) entire text | 1-9 |
| A | WO 2022/054870 A1 (KANEKA CORP.) 17 March 2022 (2022-03-17) entire text | 1-9 |
| A | WO 2021/002092 A1 (KANEKA CORP.) 07 January 2021 (2021-01-07) entire text | 1-9 |
| A | WO 2019/146555 A1 (KANEKA CORP.) 01 August 2019 (2019-08-01) entire text | 1-9 |
| A | JP 2007-186692 A (KANEKA CORP.) 26 July 2007 (2007-07-26) entire text | 1-9 |
| A | JP 10-324766 A (JSP CORP.) 08 December 1998 (1998-12-08) entire text | 1-9 |

☐ Further documents are listed in the continuation of Box C.    ☑ See patent family annex.

| | |
|---|---|
| * Special categories of cited documents: | "T" later document published after the international filing date or priority date and not in conflict with the application but cited to understand the principle or theory underlying the invention |
| "A" document defining the general state of the art which is not considered to be of particular relevance | |
| "E" earlier application or patent but published on or after the international filing date | "X" document of particular relevance; the claimed invention cannot be considered novel or cannot be considered to involve an inventive step when the document is taken alone |
| "L" document which may throw doubts on priority claim(s) or which is cited to establish the publication date of another citation or other special reason (as specified) | "Y" document of particular relevance; the claimed invention cannot be considered to involve an inventive step when the document is combined with one or more other such documents, such combination being obvious to a person skilled in the art |
| "O" document referring to an oral disclosure, use, exhibition or other means | |
| "P" document published prior to the international filing date but later than the priority date claimed | "&" document member of the same patent family |

| Date of the actual completion of the international search | Date of mailing of the international search report |
|---|---|
| **08 May 2023** | **16 May 2023** |

| Name and mailing address of the ISA/JP | Authorized officer |
|---|---|
| **Japan Patent Office (ISA/JP)** **3-4-3 Kasumigaseki, Chiyoda-ku, Tokyo 100-8915** **Japan** | |
| | Telephone No. |

Form PCT/ISA/210 (second sheet) (January 2015)

**INTERNATIONAL SEARCH REPORT**
Information on patent family members

International application No.

**PCT/JP2023/007215**

| Patent document<br>cited in search report | | | Publication date<br>(day/month/year) | Patent family member(s) | | | Publication date<br>(day/month/year) |
|---|---|---|---|---|---|---|---|
| JP | 2020-164676 | A | 08 October 2020 | WO | 2020/201935 | A1 | |
| | | | | TW | 202041564 | A | |
| WO | 2022/054870 | A1 | 17 March 2022 | (Family: none) | | | |
| WO | 2021/002092 | A1 | 07 January 2021 | US | 2022/0289927 | A1 | |
| | | | | EP | 3995532 | A1 | |
| | | | | CN | 114026161 | A | |
| WO | 2019/146555 | A1 | 01 August 2019 | US | 2020/0354539 | A1 | |
| | | | | EP | 3744771 | A1 | |
| | | | | CN | 111684001 | A | |
| JP | 2007-186692 | A | 26 July 2007 | (Family: none) | | | |
| JP | 10-324766 | A | 08 December 1998 | US | 6110983 | A | |
| | | | | WO | 1998/054244 | A1 | |
| | | | | EP | 989159 | A1 | |

Form PCT/ISA/210 (patent family annex) (January 2015)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- WO 2021002092 A
- WO 2019146555 A
- WO 2009145164 A
- WO 2013147139 A
- WO 2019142717 A

- WO 2010067543 A
- WO 2018070492 A
- JP 2009061753 A
- JP 2020158613 A

**Non-patent literature cited in the description**

- **T. FUKUI ; Y. DOI**. *J. Bateriol.*, 1997, vol. 179, 4821-4830